# EUROPÄISCHE PATENTSCHRIFT

(11) **EP 1 347 214 B1**
(45) Veröffentlichungstag und Bekanntmachung des Hinweises auf die Patenterteilung: **05.05.2010**
(21) Anmeldenummer: 03100395.7
(22) Anmeldetag: 20.02.2003
(51) Int. Cl.: F16H 61/02

(54) **Verfahren zum Steuern eines automatischen Getriebes**
Control method for an automatic transmission
Méthode de commande d'une boîte de vitesses automatique

(30) Priorität: 21.03.2002 DE 10212646
(43) Veröffentlichungstag der Anmeldung: 24.09.2003
(73) Patentinhaber: Continental Automotive GmbH, 30165 Hannover (DE)
(72) Erfinder: Graf, Friedrich, 93161 Sinzing (DE); Hauptmann, Werner, 85635 Höhenkirchen (DE); Heesche, Kai, Dr., 81539 München (DE)

(56) Entgegenhaltungen:
- WO-A-97/25555
- DE-A1- 19 528 625
- DE-A1- 19 702 554

## Beschreibung

Die Erfindung betrifft ein Verfahren nach dem Oberbegriff von Anspruch 1. Ein entsprechendes Verfahren ist aus dem Dokument DE 195 28 625 A1 bekannt. Bei diesem Verfahren zum Steuern eines automatischen Getriebes in einem Antriebsstrang eines Kraftfahrzeugs, wird durch dessen Getriebesteuerung ein Eingriff durch den Fahrer klassifiziert und die Klassifikation bei einer Gangauswahl und einem Gangwechsel berücksichtigt.

Bei einem bekannten Verfahren zum Steuern eines Automatikgetriebes (K. Heesche u.a.: IntelligenTip® - eine TrainierbareFahrstrategie, VDI-Berichte 1610 "Getriebe in Fahrzeugen 2001", 19.-20.06.2001, Seiten 745-761) ist die Zuordnung zwischen Betriebszustand und zugeordneter Schaltcharakteristik nicht fest vorgegeben, sie kann durch den Fahrer verändert werden. Dazu beobachtet ein sogenanntes intelligentes Lernsystem die Eingriffe des Fahrers über "+/-"-Tipptasten und analysiert sie darauf hin, ob der Fahrer durch seine Intervention eine Änderung des Schaltverhaltens wünscht, aus einer Fahrsituation - wie zum Beispiel der Einleitung eines Überholvorganges - heraus gehandelt hat, oder ob er das Fahrzeug manuell schalten will, wodurch eine erhebliche verbesserte Anpassung des Schaltverhaltens an den Fahrer erreicht wird.

Eine Vorausschau oder ein Antizipieren des zu erwartenden Verlaufs der Fahrsituation des Kraftfahrzeugs ("in 300 m Bergauffahrt", "Ortsausgang", "längere Ortsdurchfahrt", ...), wie es der Fahrer ohne weiteres tun kann, ist bei diesem Verfahren allerdings nicht möglich.

Der Erfindung liegt die Aufgabe zugrunde, ein Verfahren zum Steuern eines automatischen Getriebes in einem Antriebsstrang eines Kraftfahrzeugs zu schaffen, dass das Schaltverhalten des Getriebes noch besser an die Vorstellungen des Fahrers anpasst. Es soll auch eine vorausschauende Anpassung des Schaltverhaltens ermöglichen.

Die Aufgabe der Erfindung wird durch ein Verfahren nach Anspruch 1 gelöst. Bei diesem Verfahren werden durch die Getriebesteuerung im Falle eines vorausschauenden Eingriffs Merkmale einer voraus liegenden Wegstrecke aus einer Datenbasis geladen. In einem Pufferspeicher werden Wegstreckenmerkmale gesucht und, falls solche vorhanden sind, werden Eingangsdaten für eine Schaltlogik berechnet und es erfolgt eine Adaption von Klassifikationssystemen für den Eingriff.

Zweckmäßige Weiterbildungen der Erfindung sind in den Unteransprüchen niedergelegt.

Die Vorteile der Erfindung liegen insbesondere darin, dass mit ihr die Forderung des Fahrers sehr gut erfüllt wird, zu jedem Zeitpunkt nicht nur den physikalisch optimalen, sondern auch den aus seiner Sicht subjektiv "richtigen" Gang zu schalten. Damit steigt die Akzeptanz durch den Kunden und die Zufriedenheit mit seinem Automatikgetriebe. Fahreringriffe und Navigationsdaten werden in sehr zweckmäßiger Weise gemeinsam verwertet, um das Schaltverhalten des Getriebes zu verbessern.

Ausführungsbeispiele der Erfindung werden im folgenden anhand der Zeichnungen erläutert. Es zeigen:
- Figur 1: einen Antriebsstrang, in dem das Verfahren gemäß der Erfindung angewandt wird;
- Figur 2: eine Übersicht von mit der Getriebesteuerung des Antriebsstrangs nach Figur 1 zusammen wirkenden peripheren Elementen;
- Figur 3: ein Blockschaltbild der Getriebesteuerung des Antriebsstrangs nach Figur 1;
- Figur 4: eine schematisch dargestellter Identifikationspuffer der Getriebesteuerung nach Figur 3;
- Figur 5: ein Diagramm zum Erläutern der Ermittlung der Dynamik der Drosselklappenbetätigung, und
- Figur 6: ein Ablaufdiagramm eines bei dem erfindungsgemäßen Verfahrens abgearbeiteten Programms.

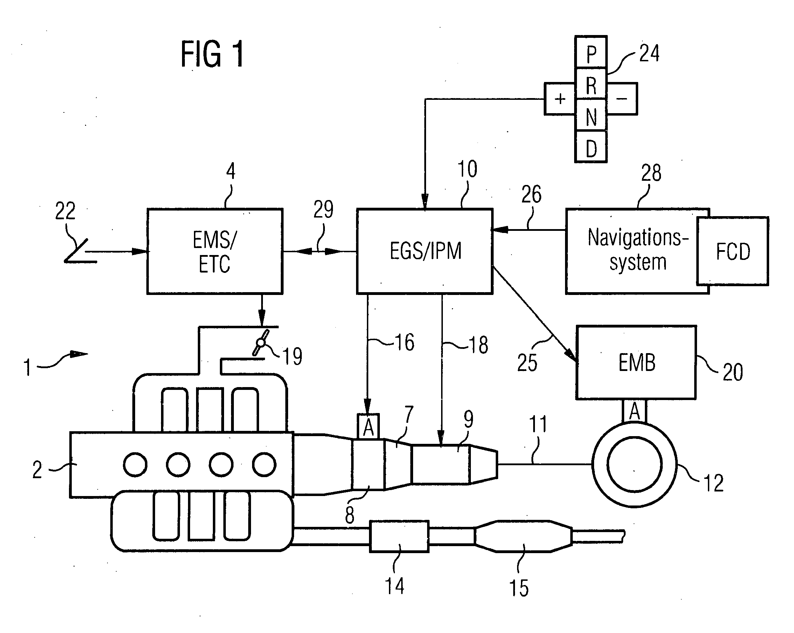

Ein Antriebsstrang 1 (Figur 1) eines Kraftfahrzeugs schließt mechanische Bestandteile ein, die im unteren Teil der Zeichnung dargestellt sind, und Steuerungen, die im oberen Teil der Zeichnung dargestellt sind: einen Antriebsmotor 2 mit einer elektronischen Motorsteuerung (abgekürzt: EMS) 4, einen hydrodynamischen Drehmomentwandler 7 mit einer Wandlerüberbrückungskupplung 8, sowie ein automatisches Getriebe 9 mit einer elektronischen Getriebesteuerung (EGS) 10. Der Radantrieb ist durch eine Gelenkwelle 11 und ein angetriebenes Rad 12 angedeutet, die Abgasanlage durch einen Katalysator 14 und einen Schalldämpfer 15. Der hydrodynamische Drehmomentwandler 7 und die Wandlerüberbrückungskupplung 8 sind hier schematisch nebeneinander dargestellt, sie sind aber tatsächlich in einem gemeinsamen Gehäuse untergebracht.

Die Wandlerüberbrückungskupplung 7 weist einen Aktuator A auf, der mit der Getriebesteuerung 10 über eine Signalleitung 16 verbunden ist. Die Getriebesteuerung ist durch eine Signalleitung 18 mit mehreren Aktuatoren in dem Getriebe 9 verbunden, die in der Zeichnung nicht im Einzelnen dargestellt sind. Die Motorsteuerung 4 schließt eine elektronische Drosselklappensteuerung ETC ein, die eine Drosselklappe 19 betätigt. Andere bekannte Motorsteuerorgane sind aber genau so gut geeignet. Die Räder sind mit einer elektromagnetischen Bremse 20 und einer zugehörigen Bremssteuerung EMB versehen.

Über ein Gaspedal 22 übermittelt der Fahrer seine Wünsche an die Motorsteuerung 4, die durch aus der Zeichnung ersichtliche Steuer- und Signalleitungen mit der Getriebesteuerung 10 des Antriebsstrangs 1 verbunden ist. Zum Eingeben der Fahrerbefehle dient ein Wählhebel 24 mit den üblichen Fahrstufen D, N, R und der Parkstellung P sowie mit zwei Schaltpositionen oder Tipptasten zum Hochschalten ("+") oder Rückschalten ("-") des Getriebes um je einen Gang.

Durch Pfeile 25 und 26 sind Datenverbindungen zwischen der Getriebesteuerung 10 und der Bremsen-Steuerung EMB einerseits sowie einem Navigationssystem 28 andererseits angedeutet. Die Getriebesteuerung 10 kann auch die Funktion eines integrierten Antriebsstrangmanagements IPM ausüben. Durch die jeweilige fahrdynamische Situation veranlasste Bremssignale, zum Beispiel ABS- und ESP-Signale, werden von eigenen Steuergeräten erzeugt, die in der Zeichnung mit dem Steuergerät EMB der elektromagnetischen Bremse 20 zusammengefasst sind.

Zusätzlich zu der Drosselklappe 16 oder einer anderen Einrichtung zum Steuern der Ansaugluftmenge steuert die Motorsteuerung 4 den Zündzeitpunkt, den Einspritzzeitpunkt und die in den Motor eingespritzte Kraftstoffmenge und/oder die Aufladung. Dies ist im einzelnen hier nicht dargestellt, da die Möglichkeiten zur Motorsteuerung für sich bekannt sind.

Die Getriebesteuerung 10 steuert über die Signalleitung 16 die Wandlerüberbrückungskupplung 8 und über die Signalleitung 18 die Übersetzung des Getriebes 9. Die Steuerungen 4 und 10 sind durch eine bidirektionale Signal- und Steuerleitung 29, zum Beispiel in Form eines Datenbusses, miteinander verbunden und tauschen über diese Datenleitungen Informationen aus, die für einen komfortablen und ökonomischen Fahrbetrieb des Kraftfahrzeugs nötig sind.

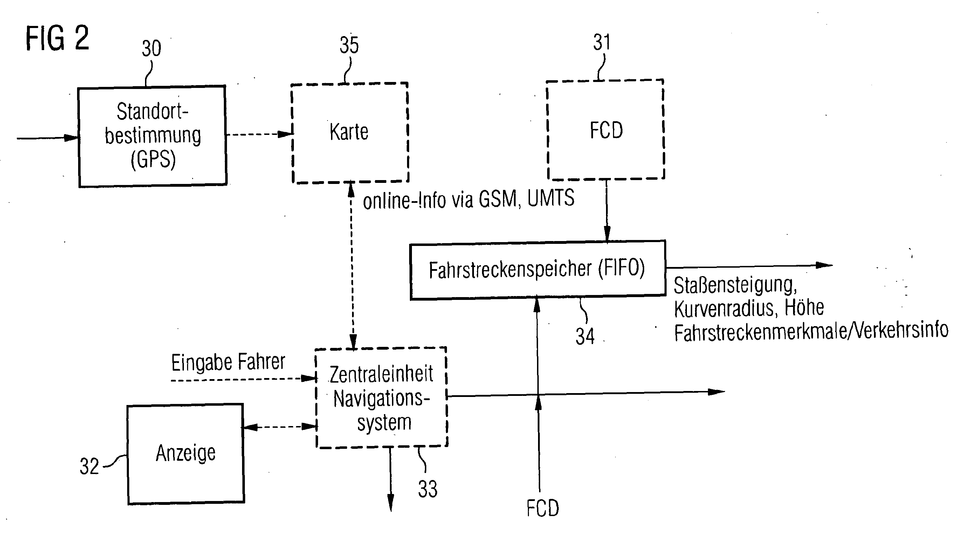

Aus Figur 2 ersichtliche Bestandteile und Elemente, mit denen die Getriebesteuerung 10 im Rahmen des Steuerverfahrens zusammenwirkt sind nachfolgend aufgeführt, wobei mit durchgehenden Linien gezeichnete Bestandteile regelmäßig vorhanden sind, während gestrichelt gezeichnete Elemente vorhanden sein können. Eine Einrichtung zur Standortbestimmung 30, die vorzugsweise als Satellitennavigationssystem GPS realisiert ist. Ein FCD-System ("floating car data"-System) 31, das - falls es schon vorhanden ist - auf Autobahnen die Verkehrsdichte ermittelt und Kraftfahrzeugen zur Verfügung stellt, die mit zugehörigen Empfängern versehen sind. Ein Anzeigeinstrument 32 für den Fahrer des Kraftfahrzeugs, das mit einer Zentraleinheit oder Bordcomputer 33, wenn das Kraftfahrzeug einen solchen aufweist, samt Navigationssystem verbunden ist. Die Zentraleinheit 33 empfängt auch die Eingaben des Fahrers.

Ein Fahrstreckenspeicher 34, der als FIFO-Pufferspeicher ausgebildet ist (er wird im folgenden auch als FIFO-Puffer bezeichnet), dient zum Speichern der Signale von im Kraftfahrzeug installierten Sensoren. Eine elektronische Straßenkarte 35 liefert dem Navigationssystem 28 oder der Zentraleinheit 33 Fahr- oder Wegstreckenmerkmale, das heißt Informationen über die Straßensteigung, den Kurvenradius, die Höhe usw. der zu befahrenden Strecke. Das FCD-System 31 liefert Verkehrsinformationen. Die Fahrstreckenmerkmale und die Verkehrsinformationen werden dem Fahrstreckenspeicher 34 zugeführt und in die Zentraleinheit des Navigationssystems 28 eingegeben.

Der FIFO-Speicher ("first in first out") legt zeitdiskrete Signale (t+n) ab, wobei n eine ganze, positive Zahl ≥0 ist. Damit kann in dem Block 34 ein Streckenverlauf antizipiert werden. Der Ausgang des FIFO-Speichers enthält nicht Daten über einzelne Abschnitte, sondern kennzeichnet einen ganzen Abschnitt. Die zeitdiskreten Signale (t+n) stammen entweder von einem "Onboard"-Speicher, wie eine CD oder DVD, oder sie können über eine datenfähige Verbindung (GSM/UMTS) von einer stationären Speichereinheit abgefragt werden. Der Fahrstreckenspeicher 34 kann auch einen Fahrstreckenmerkmalsspeicher enthalten.

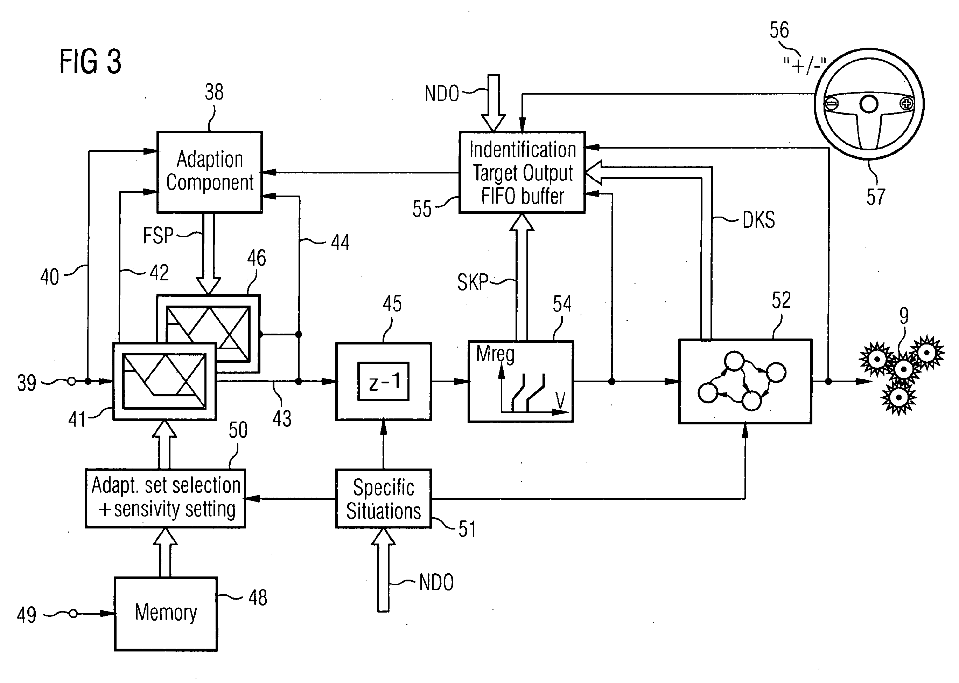

Das aus Figur 3 ersichtliche Blockschaltbild der Getriebesteuerung weist folgende Blöcke auf, wobei der Ausdruck Block nicht immer wiederholt wird. Einer Adaptionskomponente 38 werden an einem Eingang 39 ankommende Sensordaten über eine Leitung 40 als Eingangssignale zugeführt. Die Sensordaten werden auch einem ersten Fuzzy-System 41 zugeführt, das eine Fahrer- und Lastzustandserkennung durchführt und über eine Ausgangsleitung 42 Zustandsdaten an die Adaptionskomponente 38 übermittelt. Über eine zweite Ausgangsleitung 43, 44 gibt sie an die Adaptionskomponente 38 und an einen Filter 45 Fahrer- und Lastfaktoren aus.

In der Adaptionskomponente 38 werden aus den erwähnten und noch zu erwähnenden Eingangssignalen Fuzzysystemparameter FSP erzeugt und an ein zweites Fuzzy-System 46 ausgegeben. Die von diesem erzeugten Ausgangssignale werden an die Adaptionskomponente 38 und das Filter 45 übermittelt. Im einfachsten Fall ist nur ein Fuzzysystem vorhanden, es können aber auch mehr als zwei Fuzzysysteme vorgesehen sein.

Eine Speichereinheit 48 enthält individuelle Fahrerparametersätze, die zum Beispiel in der Getriebesteuerung 10 oder in dem Bordcomputer 33 durch eine Fahreridentifikation selektiert werden. Oder aber es wird für jeden Fahrer ein persönlicher Datenträger, zum Beispiel in Form einer Chipkarte, eingesetzt und als Fahrer-ID 49 eingegeben. Die Fahrerparametersätze werden in einem Block 50 "Adaptionssatzselektion und Empfindlichkeitseinstellung" ausgewertet und das Ergebnis dem Fuzzy-System 41 zugeführt. Der Block 50 wertet auch "besondere Umstände" aus, die in einem Block 51 anhand von online empfangenen Navigationsdaten NDO erkannt werden. Die Ausgangssignale des Blocks 51 gelangen auch an das Filter 45 und an einen Block "Zustandsautomat" 52 für automatische Schaltpunktkorrekturen.

Dynamische Korrekturen verändern in bestimmten Fahrzuständen - zum Beispiel bei einer schnellen Fahrpedalrücknahme, bei einer Bergab-Bremsunterstützung usw. - die von den Schaltkennfeldern vorgegebene Schaltentscheidung. Dies wird über einen sogenannten Zustandsautomaten realisiert, dessen Zustandsübergänge mit Fuzzy-Systemen gesteuert werden.

Das Ausgangssignal des Filters 45 wird auf eine Schaltkennfeldinterpolation 54 gegeben, und in dieser werden Schaltkennfelparameter SKP erzeugt, die an eine Identifikationsstufe mit FIFO-Puffer 55 für das Zielausgangssignal (target output) übermittelt werden. Das Zielausgangssignal stellt den Befehl dar, der dem Fahrereingriff entspricht. Eine in der Schaltkennfeldinterpolation ermittelte Sollübersetzung wird einerseits der Identifikationsstufe 55 und andererseits der Dynamikkorrektur-Zustandsmaschine 52 zugeführt. Die Identifikationsstufe 55 erkennt anhand der genannten und noch zu nennender Eingangssignale die Art des Fahrereingriffs, das heißt ob dieser zum Beispiel als adaptiver oder als vorausschauender Eingriff zu werten ist.

In der Dynamikkorrektur-Zustandsmachine 52 wird ein Dynamikzustands-Korrektursignal DKS erzeugt und auf einen weiteren Eingang der Identifikationsstufe 55 gegeben. In der Dynamikkorrektur-Zustandsmachine 52 wird ein korrigierter Wert der Sollübersetzung oder des Zielgangs berechnet und an das Getriebe 9 gesendet. Der korrigierte Wert wird auch der Identifikationsstufe 55 zugeführt. Diese empfängt auch noch online zur Verfügung gestellte Navigationsdaten NDO und die Schaltbefehle oder Fahrereingriffe, die der Fahrer durch betätigen der bereits erwähnten "+/-"-Tipptasten 56 erzeugt, welche an dem Lenkrad 57 des Kraftfahrzeugs oder aber in dessen Nähe angebracht sind.

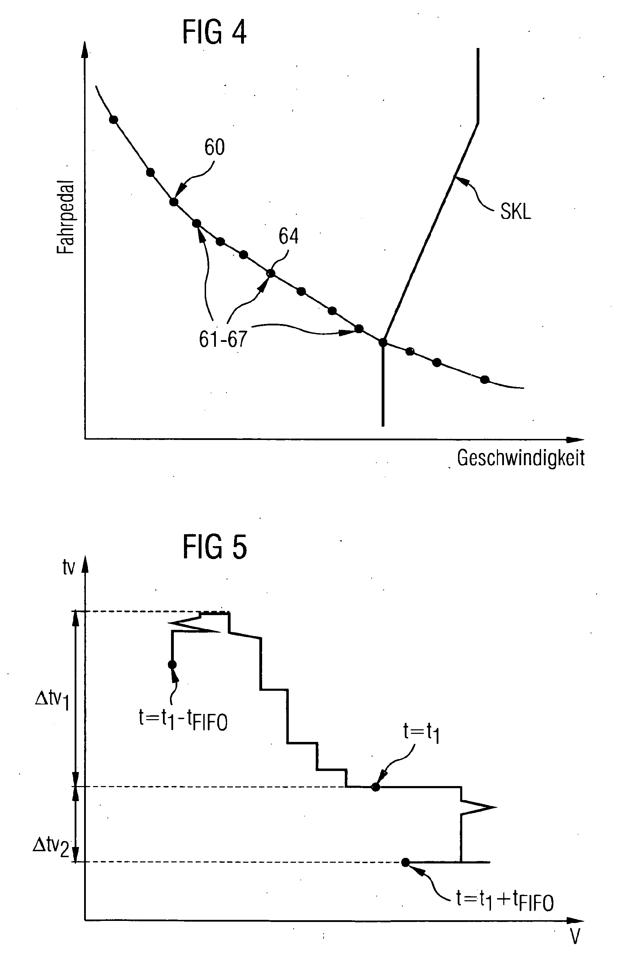

Die Wirkungsweise des erfindungsgemäßen Verfahrens wird nun an Hand der Figuren 4 bis 6 in weiteren Einzelheiten erläutert. Zur Beeinflussung der automatischen Gangwahl durch den Fahrer dient die durch die Tipptasten 56 gebildete Benutzerschnittstelle. Die Eingriffe oder Aktionen des Fahrers initiieren dabei einen Wechsel vom automatischen in den manuellen Schaltmodus. Sie werden der Identifikationsstufe 55 zugeführt, in der die Fahrereingaben verschiedenen Klassen zugeordnet werden, die die möglichen Ursachen für eine Intervention seitens des Fahrers wie folgt strukturell einordnen:
- Eine Adaption der Bewertung des Fahrerverhaltens.
- Eine Adaption der Bewertung des Lastfaktors.
- Ein Bremseingriff auf ebener Straße.
- Eine Schaltung im Vorgriff auf eine bevorstehende Fahrsituation.
- Eine Schaltung zur Kompensation einer vorhergehenden Schaltung.
- Ein unzulässiger Eingriff.
- Eine Adaption einer der Fuzzy-Bewertungen außerhalb des zulässigen Bereichs.
- Ein Wunsch des Fahrers nach einer Rückführung in den automatischen Schaltmodus.

Die Klassifikation erfolgt auf Basis der aufgenommen Sensordaten, die in dem FIFO-Puffer 34, 55 abgelegt werden. Figur 4 zeigt einen schematischen Überblick über die Art der Pufferung. In einem Diagramm ist die Abhängigkeit zwischen der Fahrpedalstellung und der Geschwindigkeit des Kraftfahrzeugs dargestellt. Zur besseren Übersichtlichkeit ist nur eine Schaltkennlinie SKL eingezeichnet. FIFO-Puffer-Einträge 60 bis 67 sind als schwarze Punkte dargestellt. Die Punkte repräsentieren die zeitlich aufeinanderfolgenden Einträge in den FIFO-Puffer.

Bei einem Fahrereingriff (siehe FIFO-Eintrag 64) werden mehrere Sekunden vor und nach dem Eingriff aufgezeichnet, um die Fahrsituation und die Fahrerreaktion vor und nach dem Eingriff beurteilen und gegebenenfalls mit dem Zeitpunkt der zugehörigen automatischen Schaltung über die aktive Schaltkennlinie vergleichen zu können.

In dem FIFO-Puffer werden insgesamt folgende Variablen abgelegt: die Fahrpedalstellung tv_f, die Kraftfahrzeuggeschwindigkeit vsp, die Fahrerbewertung dr_f, die Lastbewertung ld_f, der einzulegende Getriebegang gp_nxt, der Zustand der dynamischen Korrekturen st_cor_dyn und ein Fuzzy-Parameter für die Verzögerung des Kraftfahrzeugs up_del_ac. Ein Zusatz "f" lässt erkennen, dass es sich um eine gefilterte Größe handelt. Er wird im folgenden weg gelassen.

In Abhängigkeit von der Fahrereingriffsklassifikation werden Aktionen eingeleitet, als deren Ergebnis entweder der manuelle Schaltmodus aktiviert bleibt oder der automatische Schaltmodus reaktiviert wird. Neben der reinen Steuerung der manuellen Schaltfunktionen kann die Identifikationsstufe einen Adaptionswunsch des Fahrers erkennen.

Vorausschauende Eingriffe können bislang nicht zu einer Adaption herangezogen werden, da nur ein Bezug zur aktuellen Position oder zu dem Zustand des Fahrzeugs besteht. Eine "Vorausschau" oder ein Antizipieren ("in 300 m Bergauffahrt", "Ortsausgang", "längere Ortsdurchfahrt"), wie es dem Fahrer möglich ist, können erweiternd in der Form realisiert werden, dass ein Zeit- oder Wegkorridor benützt wird, um vorausschauende Eingriffe zur Bewertung heranzuziehen. Ein solcher Zeit- oder Wegkorridor beschreibt eine vorgegebene Fahrstrecke beziehungsweise die Fahrstrecke, die in einer vorgegebenen Zeit zurückgelegt den kann. Dieser Korridor wird zum Bestimmen der Fahrstreckenmerkmale herangezogen. Das heißt, zukünftige Wegabschnitte (von beispielsweise 100 m) werden mit einer Schaltlogik, die in der Identifikationsstufe mit FIFO-Puffer 55 enthalten ist, vorausberechnet und ein prädiktiver Eingriff wird ihnen gezielt zugeordnet.

Dieser Eingriff wird nun, wie an Hand von Figur 5 erläutert, ermittelt. Die Fahrzeuggeschwindigkeit v und die Fahrpedalaktivität tv werden eine Zeitspanne t₁-t_{FIFO} vor und eine Zeitspanne t₁+t_{FIFO} nach dem Zeitpunkt t=t₁ eines Eingriffs aufgezeichnet. Dabei ist t_{FIFO} die Laufzeit des FIFO-Puffers (aktuell 2s). Δtv₁ ist die maximale Fahrpedalbewegung im Zeitraum t_{FIFO} vor dem Eingriff. Δtv₂ ist die maximale Fahrpedalbewegung im Zeitraum t_{FIFO} nach dem Eingriff. Erfolgt die Fahrpedalaktion in Form einer signikanten Verstellung (bezüglich Dynamik und Hub) nach dem Schalteingriff, so wird dieser Fahrereingriff als prädiktiv erkannt (zum Beispiel eine Rückschaltanforderung mit anschließendem Loslassen des Fahrpedals).

Darüber hinaus wird unabhängig von der Fahrpedalaktion ein prädiktiver Eingriff erkannt, wenn zum Beispiel ein Abbiegevorgang oder eine rote Ampel naht (von einer Online-Informationsbasis gemeldet). Ein weiteres Beispiel ist: Eine kurzfristige, langsame Fahrt (mit etwa 30-40 km/h für einige Sekunden) kann bei einer Landstraßenfahrt ein langsames Fahrzeug bedeuten, das gleich überholt werden wird. Dann kann für einen gewissen Zeitraum eine erhöhte Momentenreserve (das heißt ein kleinerer Gang) bereit gehalten werden, um eine zügiges Überholen zu ermöglichen. Dies ist insbesondere bei einem automatisiertes Handschaltgetriebe vorteilhaft, da dort eine manuelle vorausschauende Rückschaltung sinnvoll erscheint, um eben diese zusätzliche Momentenreserve zu erhalten. Die Information über vorausfahrenden Verkehr wird von einem erweiterten FCD-System 31 geliefert.

Ein weiteres Beispiel ist folgendes. Ein Fahrzeug bewegt sich auf eine Bergstrecke zu, worauf der Fahrer 30 m vor dem Anstieg eine Rückschaltung als Wunsch manuell einleitet. Ein solches Sollverhalten kann dann bei einem gleichartigen Fahrmanöver an gleicher Stelle reproduziert werden.

Eine wichtige Voraussetzung des Verfahrens ist, dass ein kommender Streckenabschnitt nach signifikanten Attributen abgesucht wird. Diese können sein:
- Ein kommender Wechsel der Steigung, ein Zufahren auf eine Kurve, eine Einfahrt in eine Ortschaft oder Autobahn, eine Landstraße, ein Abbiegen in eine andere Straße, ein Parkhaus, einen Parkplatz usw.
- Ein Erkennen derartiger Ereignisse in der Zukunft und eine Ablage in dem Fahrstrecken(merkmals)speicher.
- Bei einem manuellen Schaltungseingriff eine Einordnung als vorausschauender Eingriff.
- Ein Vergleich der FIFO-Einträge der Klasse "Voraussuchen nach vorgegebenen Merkmalen" ("nach 30m rechts Abbiegen").
- Berechnen der Eingangsdaten für die Schaltlogik zum Eingriffszeitpunkt.
- Anwendung eines bekannten Verfahrens (DE 197 52 623 C2), das Adaptionskomponenten für die Adaption der FuzzySysteme erstellt, allerdings unter Bildung persönlicher A-daptionsparameter, die sich auf den Fahrerwunsch hinsichtlich des Verhaltens bei voraus liegenden Streckenmerkmalen beziehen.

In diesem Ausführungsbeispiel wird eine vorhandene Funktion wie eine Fahrer- oder Lastwertbildung so adaptiert, dass sich das gewünschte Verhalten einstellt. Dazu gehören auch sogenannte dynamische Korrekturen (auch als Kurzzeiteingriffe bezeichnet) wie eine Bremsassistenz (Beispiel: Der Fahrer wünscht solche Bremsrückschaltungen vor einem Abbiegen früher als üblich, das heißt bei höheren Motordrehzahlen als in der Grundabstimmung des Getriebes vorgesehen). Bei Annäherung an ein derartiges Streckenmerkmal wird dann nach der Adaption die Schaltung "fahrerwunschgemäß" reproduziert.

Dabei sind eindeutige Merkmale wie Hindernisse und Abbiegevorgänge einfacher zu handhaben als kontinuierliche Veränderungen (Zufahren auf eine Kurve, eine Steigung oder einen Berg). Eine vollständige Prognose für den kommenden Streckenabschnitt ist notwendig, und zwar berechnet auf der Basis der Zeitachse oder Wegachse (die Streckenverlaufsdaten sind bekannt aus einer digitalen Karte oder einem Online-Kanal, der zum Übermitteln von Kartendaten einer externen Datenquelle dient). Dieser Online-Kanal muss datenfähig sein. Dazu steht derzeit die GSM-Technik zur Verfügung (globaler Mobilfunkstandard) und zukünftig die UMTS-Technik (voraussichtlich ab 2003). Damit erschließen sich viele Online-Dienste. Auch die angenommene Fahrzeuggeschwindigkeit ist bekannt.

Auf der Grundlage der ermittelten signifikanten Daten wird der kommende Wegabschnitt oder der kommende Zeitabschnitt mit einem angenommenem Geschwindigkeitsprofil berechnet. Lässt sich ein prädiktiver Eingriff einem Abschnitt zuordnen, so kann die Getriebesteuerung auch bezüglich des kommenden Weg- oder Zeitabschnitts optimiert oder adaptiert werden. Wichtig ist dabei festzustellen, auf welches kommende Ereignis sich die Fahrerreaktion bezieht. Dies wird zum Beispiel mit einem System erkannt, das die Blickrichtung des Fahrers erfasst (bekannte derartige Systeme werden eingesetzt, um Müdigkeit beim Fahrer eines Kraftfahrzeugs zu erkennen).

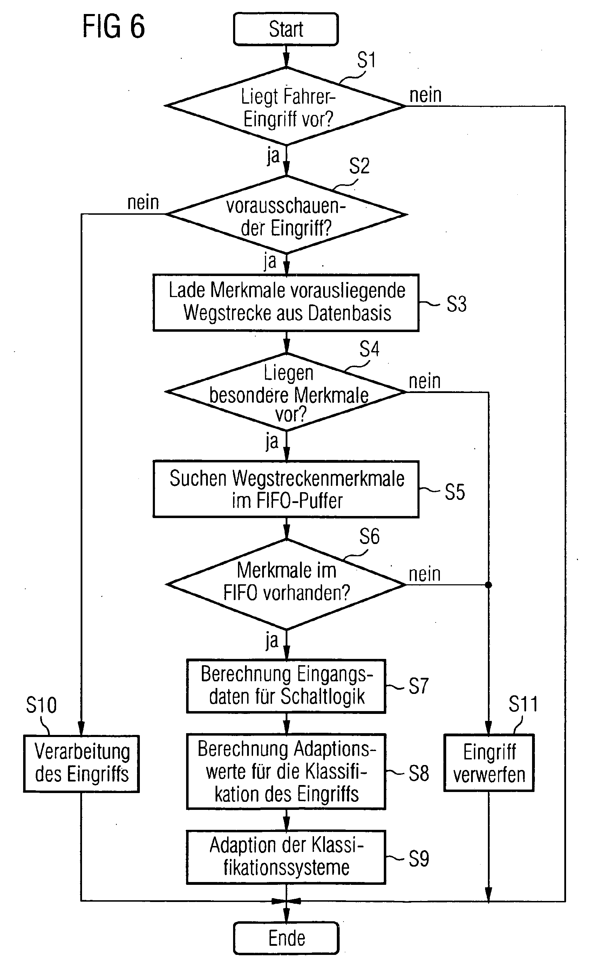

Das aus Figur 6 ersichtliche Ablaufdiagramm eines bei dem erfindungsgemäßen Verfahrens abgearbeiteten Programms weist folgende Schritte auf:

### Start

- **S1**: Es wird abgefragt, ob ein Fahrereingriff vorliegt. Falls ja, wird in einem Schritt
- **S2**: festgestellt, ob es ein vorausschauender Eingriff ist. Falls ja, werden in einem Schritt
- **S3**: die Merkmale der voraus liegenden Wegstrecke aus einer Datenbasis geladen. Dann wird in einem Schritt
- **S4**: abgefragt, ob besondere Merkmale vorliegen. Falls ja, werden in einem Schritt
- **S5**: Wegstreckenmerkmale in dem FIFO-Pufferspeicher gesucht und in einem Schritt
- **S6**: wird abgefragt, ob solche Merkmale in dem FIFO-Pufferspeicher vorhanden sind. Falls ja, werden in einem Schritt
- **S7**: Eingangsdaten für die Schaltlogik berechnet. Mit diesen Daten werden in einem Schritt
- **S8**: Adaptionswerte für die Klassifikation des Fahrereingriffs berechnet. Mit diesen Werten werden in einem Schritt
- **S9**: die Klassifikationssysteme adaptiert. Damit ist das Programm an seinem Ende angelangt. Ist die Antwort auf die Frage des Schritts S2 nein, so wird in einem Schritt
- **S10**: der Fahrereingriff verarbeitet. Ist die Antwort auf die Frage des Schritts S4 nein, so wird in einem Schritt
- **S11**: der Fahrereingriff verworfen. Dann springt das Programm zu seinem Ende. Ist die Antwort auf die Frage des Schritts S1 nein, so springt das Programm ebenfalls zu seinem **Ende.**

Das Programm wird laufend zyklisch abgearbeitet und passt dabei die Schaltvorgänge unter Berücksichtigung der Navigationsinformation an das Fahrerwunschverhalten an.

## Patentansprüche

1. Verfahren zum Steuern eines automatischen Getriebes in einem Antriebsstrang eines Kraftfahrzeugs,
- durch dessen Getriebesteuerung ein Eingriff durch den Fahrer verschiedenen Klassen zugeordnet und diese Klassifikation bei einer Gangauswahl und einem Gangwechsel berücksichtigt wird,
**dadurch gekennzeichnet,**
- **dass** durch die Getriebesteuerung im Falle eines prädiktiven Eingriffs durch den Fahrer Merkmale einer voraus liegenden Wegstrecke aus einer Datenbasis in einen Pufferspeicher geladen werden,
- **dass** in einem Pufferspeicher die Fahrsituation des Kraftfahrzeugs und den Fahrereingriff beschreibende Variablen für eine der Laufzeit (t_{FIFO}) des FIFO-Puffers entsprechende Zeitspanne vor und nach dem Zeitpunkt eines Eingriffs aufgezeichnet werden,
- **dass** in dem Pufferspeicher besondere Wegstreckenmerkmale gesucht werden, und,
-- falls diese vorhanden sind, dass Eingangsdaten für eine Schaltlogik berechnet werden und eine Adaption von Klassifikationssystemen für den Eingriff an das von dem Fahrer erwünschte Verhalten erfolgt, oder,
-- falls diese Wegstreckenmerkmale nicht vorhanden sind, dass der Fahrereingriff verworfen wird.

2. Verfahren nach Anspruch 1, **dadurch gekennzeichnet, dass** im Falle eines nicht-prädiktiven Fahrereingriffs der Fahrereingriff zum Steuern des Getriebes verarbeitet wird.

3. Verfahren nach Anspruch 1, **dadurch gekennzeichnet, dass** über eine Benutzerschnittstelle eingegebene Fahreraktionen einer Identifikationsstufe zugeführt werden, in der sie verschiedenen Klassen zugeordnet werden, die die möglichen Ursachen für die Fahreraktionen strukturell einordnen.

4. Verfahren nach Anspruch 3, **dadurch gekennzeichnet, dass** durch die Identifikationsstufe anhand von einer Sollübersetzung, von Tipptastensignalen und von Schaltkennfeldparametern die Art des Fahrereingriffs ermittelt wird.

5. Verfahren nach Anspruch 1, **dadurch gekennzeichnet, dass** zukünftige Wegabschnitte mit der Schaltlogik vorausberechnet werden und ihnen ein prädiktiver Eingriff zugeordnet wird.

6. Verfahren nach Anspruch 1, **dadurch gekennzeichnet, dass** die Fahrzeuggeschwindigkeit und die Fahrpedalaktivität eine Zeitspanne vor und eine Zeitspanne nach dem Zeitpunkt eines Eingriffs aufgezeichnet werden und dass, falls die Fahrpedalaktion in Form einer signikanten Verstellung nach dem Schalteingriff erfolgt, dieser Fahrereingriff als prädiktiv erkannt wird.

7. Verfahren nach Anspruch 1, **dadurch gekennzeichnet, dass** in einer Speichereinheit enthaltene individuelle Fahrerparametersätze durch eine Fahreridentifikation selektiert werden.

8. Verfahren nach Anspruch 1, **dadurch gekennzeichnet, dass** die Klassifikation der Fahrereingaben auf der Grundlage von aufgenommen Sensordaten, die in einem FIFO-Pufferspeicher abgelegt werden, erfolgt.

## Claims

1. Method for controlling an automatic transmission in a drive train of a motor vehicle,
- by means of the transmission control of which an intervention by the driver is assigned to various classes and said classification is taken into account during a gear selection and a gear change,
**characterised in that**
- in the event of a predictive intervention by the driver, features of a route lying ahead are loaded from a database into a buffer memory by the transmission control,
- the driving situation of the motor vehicle and variables describing the driver intervention are recorded in a buffer memory for a time period corresponding to the run time (t_{FIFO}) of the FIFO buffer prior to and after the specific time of an intervention,
- particular route features are searched for in the buffer memory, and,
-- if these are present, input data for gear shift logic is calculated and classification systems for the intervention are then adapted to the behaviour desired by the driver, or,
-- if these route features are not present, the driver intervention is rejected.

2. Method according to claim 1, **characterised in that** in the event of a non-predictive driver intervention, the driver intervention is processed for the purpose of controlling the transmission.

3. Method according to claim 1, **characterised in that** driver actions input via a user interface are fed to an identification stage in which they are assigned to various classes which structurally categorise the possible reasons for driver actions.

4. Method according to claim 3, **characterised in that** the type of driver intervention is determined by the identification stage on the basis of a nominal transmission ratio, pushbutton signals and gear shift pattern parameters.

5. Method according to claim 1, **characterised in that** future route sections are calculated in advance by means of the gear shift logic and a predictive intervention is assigned thereto.

6. Method according to claim 1, **characterised in that** the vehicle speed and accelerator pedal activity are recorded for a period of time prior to and a period of time after the specific time of an intervention and that, if the accelerator pedal action takes place in the form of a significant displacement after the gear shift intervention, said driver intervention is recognised as predictive.

7. Method according to claim 1, **characterised in that** individual driver parameter sets contained in a memory unit are selected by means of driver identification.

8. Method according to claim 1, **characterised in that** the driver inputs are classified on the basis of recorded sensor data which is stored in a FIFO buffer memory.

## Revendications

1. Procédé de commande d'une boîte de vitesses automatique insérée dans une ligne de propulsion d'un véhicule automobile,
- dont la commande de boîte de vitesses affecte une action du conducteur à diverses classes, cette classification étant prise en considération lors d'un choix de rapport de vitesses et d'un changement de rapport de vitesses,
**caractérisé en ce que**
- dans le cas d'une action prédictive exécutée par le conducteur, des caractéristiques d'un tronçon de parcours à parcourir par la suite sont chargées par la commande de boîte de vitesses dans une mémoire tampon à partir d'une base de données,
- la situation de conduite du véhicule automobile et les variables décrivant l'action du conducteur sont enregistrées dans une mémoire tampon pendant un laps de temps correspondant au temps de circulation (t_{FIFO}) d'un tampon FIFO avant et après l'instant d'une action,
- des caractéristiques particulières de tronçons de parcours sont recherchées dans la mémoire tampon, et
- lorsque les caractéristiques de tronçons de parcours sont disponibles, des données d'entrée pour une logique de commutation sont calculées et il se produit une adaptation de systèmes de classification pour l'action, au comportement souhaité par le conducteur, ou
- lorsque les caractéristiques de tronçons de parcours ne sont pas disponibles, l'action du conducteur est rejetée.

2. Procédé selon la revendication 1, **caractérisé en ce que** dans le cas d'une action du conducteur non prédictive, l'action du conducteur est traitée pour commander la boîte de vitesses.

3. Procédé selon la revendication 1, **caractérisé en ce que** des actions de conducteur introduites par l'intermédiaire d'une interface d'utilisateur sont transmises à un étage d'identification dans lequel elles sont attribuées à diverses classes qui classifient structurellement les causes possibles des actions de conducteur.

4. Procédé selon la revendication 3, **caractérisé en ce que** l'étage d'identification détermine le type d'action de conducteur au moyen d'une conversion de consigne, de signaux de touches de clavier et de paramètres de champ caractéristique de commutation.

5. Procédé selon la revendication 1, **caractérisé en ce que** des tronçons de parcours futurs sont calculés au préalable à l'aide de la logique de commutation et **en ce qu'**il leur est attribué une action prédictive.

6. Procédé selon la revendication 1, **caractérisé en ce que** la vitesse du véhicule automobile et l'activité de la pédale d'accélérateur sont enregistrées pendant un laps de temps précédent et pendant un laps de temps suivant une action et **en ce que** dans le cas où l'action sur la pédale d'accélérateur se produit sous la forme d'un déplacement significatif après l'intervention de commutation, cette action du conducteur est reconnue comme étant prédictive.

7. Procédé selon la revendication 1, **caractérisé en ce que** des groupes de paramètres individuels de conducteur contenus dans une unité de mémoire sont sélectionnés au moyen d'une identification de conducteur.

8. Procédé selon la revendication 1, **caractérisé en ce que** la classification des entrées de conducteur se produit sur la base de données de capteurs enregistrées qui sont enregistrées dans une mémoire tampon FIFO.
